# NEUE EUROPÄISCHE PATENTSCHRIFT

(11) **EP 0 287 935 B2**
(45) Veröffentlichungstag und Bekanntmachung des Hinweises auf die Entscheidung über den Einspruch: **05.01.1994**
(45) Hinweis auf die Patenterteilung: 22.08.1990
(21) Anmeldenummer: 88105841.6
(22) Anmeldetag: 13.04.1988
(51) Int. Cl.: B02C 19/14, B02C 23/24

(54) **Vorrichtung zum Zerkleinern von Behältern**
Crushing device for containers
Dispositif de broyage pour récipients

(30) Priorität: 22.04.1987 DE 3713477
(43) Veröffentlichungstag der Anmeldung: 26.10.1988
(73) Patentinhaber: seiba Entsorgungstechnik GmbH, D-77866 Rheinau (DE)
(72) Erfinder: Borck, Dieter, Dipl.-Ing., D-7580 Bühl-Weitenung (DE)
(74) Vertreter: Durm, Frank, Dipl.-Ing.

(56) Entgegenhaltungen:
- DE-A- 3 018 795
- DE-A- 3 325 571
- DE-A- 3 438 310
- DE-B- 1 929 232
- US-A- 4 349 054
- US-A- 4 356 981
- VDI-Berichte 304, 1977
- W.Bartknecht "Explosionen" Springer Verlag, 1980

## Beschreibung

Die Erfindung betrifft eine Vorrichtung zum Zerkleinern und Beseitigen von unter Druck stehenden Metalldosen, welche Treibmittel und/oder leicht brennbare Restprodukte in flüssiger oder fester Form enthalten, mit einem Arbeitsraum, in dem motorgetriebene Zerkleinerungswerkzeuge angeordnet sind.

Unter dem Druck eines Treibmittels stehende Metallbehälter sind weit verbreitet, beispielsweise in Form von Spraydosen. Häufig enthalten die Dosen leicht brennbare oder giftige, jedenfalls umweltgefährdende Produkte in flüssiger, fester oder gasförmiger Form. Derartige Behälter können deshalb nicht einfach wie gewöhnlicher Hausmüll deponiert werden, sondern sind einer gesonderten Abfallbeseitigung zuzuführen. Dabei müssen die Behälter zerkleinert werden, einmal um das darin enthaltene restliche Treibmittel und gegebenenfalls die Restprodukte aufzufangen und so eine ordnungsgemäße Entsorgung zu gewährleisten, zum anderen, um die Metalle, aus welchen die Behälter meistens gefertigt sind, als Recycling-Material wieder dem Rohstoffkreislauf zuzuführen.

Bei der mechanischen Zerkleinerung von nicht vollständig entleerten Metalldosen besteht Explosionsgefahr, insbesondere wenn die Reste leichtentzündliche Bestandteile enthalten. Besonders problematisch ist die Beseitigung kompletter Fehlchargen gefüllter, unter hohem Druck stehender Dosen bzw. überlagerter Produkte.

Aus der US-PS 4 356 981 ist eine Vorrichtung zur Beseitigung von Behältern, welche Aerosole oder Treibmittel, entflammbare Gase oder giftige Chemikalien enthalten, bekannt. Die zu beseitigenden Behälter werden in einem Shredder zerstört; die Restbestandteile fallen anschließend nach unten auf eine Fördereinrichtung mit einem perforierten Förderband. Die Fördereinrichtung ist innerhalb eines im wesentlichen nach außen abgedichteten Gehäuse angeordnet, durch welches eine Luftstromung geleitet wird. Die flüssigen Restbestandteile tropfen durch die Löcher im Förderband nach unten ab und werden in einer darunter liegenden Wanne aufgefangen und über einen Flüssigkeits-Auslaß entleert. Die gasförmigen Bestandteile werden, zusammen mit der in das Gehäuse eingeleiteten Luft, über eine Absaugöffnung mittels eines Unterdruckgebläses kontrolliert abgeführt. Die mechanische Zerkleinerung der Behälter selbst geschieht jedoch nach wie vor in einer Atmosphäre, welche Sauerstoff enthält. Insbesondere Behälter, welche leicht entzündliche Bestandteile enthalten, können deshalb mit dieser vorbekannten Vorrichtung nicht gefahrlos zerkleinert bzw. beseitigt werden.

Aufgabe vorliegender Erfindung ist es somit, eine verbesserte Vorrichtung zur gefahrlosen und umweltfreundlichen Zerkleinerung und Beseitigung großer Mengen von unter Druck stehenden Metalldosen, welche Treibmittel und/oder Restprodukte enthalten, zu schaffen.

Bei der Lösung dieser Aufgabe wird ausgegangen von einer Vorrichtung zum Zerkleinern von Behältern der eingangs genannten Art; gelöst wird die Aufgabe dadurch, daß der Arbeitsraum luftdicht abgeschlossen ist, daß darin während des Betriebs ein leichter Überdruck aufgebaut werden kann, daß in den Arbeitsraum eine Einlaßöffnung für Stickstoff mündet, ferner über dem Arbeitsraum eine Schleuse angeordnet ist, welche einen oberen und einen unteren Schleusenschieber sowie einen von diesen luftdicht abschließbaren Schleusenbehälter umfaßt, daß ein Fülltrichter auf die Schleuse aufgesetzt ist und eine Fördereinrichtung zum kontinuierlichen Einfüllen von Behältern in den Fülltrichter vorgesehen ist, daß weiter eine Auffangvorrichtung für die Bestandteile der zerkleinerten Behälter vorgesehen ist, welche sich luftdicht an den Arbeitsraum anschließt, und mit dem Arbeitsraum eine Abgasleitung zur Abführung der bei der Zerkleinerung freigesetzten Gase in Verbindung steht, und daß schließlich eine Sauerstoff-Meßeinrichtung zur Überwachung des Sauerstoffgehalts in der Abluft vorgesehen ist.

Während des Betriebs herrscht im Arbeitsraum der erfindungsgemäß ausgebildeten Vorrichtung eine inerte Schutzgas-Atmosphäre mit leichtem Überdruck gegenüber der Umgebung. Selbst unter hohem Innendruck stehende Metalldosen mit hochbrennbarem Inhalt können so trotz kaum vermeidbarer Funkenbildung gefahrlos mechanisch zerkleinert werden. Die inerte Schutzgas-Atmosphäre verhindert zuverlässig jede Gefahr einer Selbstentzündung des schlagartig aus den zerplatzenden Dosen entweichenden Inhalts.

Als Schutzgas kann Stickstoff, Kohlendioxid oder ein anderes Inertgas verwendet werden.

Die geringen, beim zyklischen Eindringen von neuen Behältern in die Schleuse entweichenden Mengen von Schutzgas werden über die in den Arbeitsraum mündenden Einlaßöffnungen fortwährend ersetzt. Die bei der Zerkleinerung anfallenden festen Bestandteile der Behälter fallen nach unten in die Auffangvorrichtung; eventuell vorhandene flüssige Bestandteile sammeln sich ebenfalls in der Auffangvorrichtung. Wertstoffe können so wiedergewonnen werden. Gasförmige Bestandteile werden über die Abgasleitung abgeführt und einer gezielten Entsorgung zugeleitet. Die mit der Erfindung geschaffene Vorrichtung erlaubt somit eine völlig gefahrlose und umweltfreundliche Beseitigung von Metallbehältern mit kritischem Inhalt, wobei durch das Zusammenwirken von Fördereinrichtung, Fülltrichter und Schleusenschiebern auch größere Mengen von Dosen in einem kontinuierlichen Prozeß verarbeitet werden können.

Bei einer bevorzugten Ausführungsform der Erfindung sind die Einlaßöffnungen für Schutzgas oberhalb der Zerkleinerungswerkzeuge angeordnet. Nach oben in die Schleuse entwichener Stickstoff kann so sehr schnell ersetzt werden. Zweckmäßigerweise stehen die Einlaßöffnungen mit einer Ringleitung in Verbindung, welche um den Arbeitsraum herumführt. An diese Ringleitung läßt sich eine zentrale Hauptversorgungsleitung anschließen. Gesteuert von einem Hauptmagnetventil lassen sich schnell große Mengen von Schutzgas über diese Hauptversorgungsleitung, die Ringleitung und die Einlaßöffnungen in den Arbeitsraum einleiten. Bevor mit der Zerkleinerung von Behältern begonnen wird, muß nämlich die in der Vorrichtung befindliche sauerstoffhaltige Luft herausgedrückt werden. Erst wenn innerhalb des Arbeitsraums die untere Explosionsgrenze unterschritten ist, kann die Zerkleinerung beginnen.

Während des normalen Betriebs bleibt das Hauptmagnetventil in der Hauptversorgungsleitung geschlossen. Um dennoch geringe Schutzgas-Mengen ergänzen zu können, ist bei einer vorteilhaften Weiterbildung der Zerkleinerungsvorrichtung eine Bypass-Leitung vorgesehen, welche das Hauptmagnetventil überbrückt. Die Regelung des Schutzgas-Stroms ist so, daß stets ein leichter Überdruck aufrechterhalten wird; sie erfolgt zweckmäßigerweise mittels eines Nebenmagnetventils innerhalb der Bypass-Leitung.

Die den Schleusenbehälter abschließenden Schleusenschieber sind bevorzugt pneumatisch, hydraulisch oder elektrisch betätigt. Die Endstellungen der Schleusenschieber können mittels elektrischer Endschalter überwacht werden. Ein nicht ordnungsgemäßes Verschließen der Schleuse kann so erkannt und die Vorrichtung abgeschaltet werden.

Ferner ist es vorteilhaft, wenn an der Schleuse weitere Einlässe für Schutzgas vorgesehen sind, über die Schutzgas direkt auch in diesen Raum eingeleitet werden kann. Die Entstehung eines explosionsfähigen Gemischs kann so auch dann verhindert werden, wenn aus den Behältern beim Einbringen in die Schleuse Treibgas oder Restprodukte entweichen. Zweckmäßigerweise werden diese weiteren Einlässe über eine zweite Ringleitung, die um die Schleuse herumführt, mit Schutzgas versorgt.

Der Erhöhung der Betriebssicherheit dem Vorrichtung dient es, wenn im Arbeitsraum eine Druckmesseinrichtung zur Überwachung des Schutzgas-Druckes vorgesehen ist.

Die vorzugsweise in der Abgasleitung vorgesehene Sauerstoff-Meßeinrichtung dient in erster Linie dazu, beim Durchspülen der Vorrichtung mit Schutzgas vor der Inbetriebnahme der Anlage anzuzeigen, daß keine sauerstoffhaltige Luft mehr im Arbeitsraum vorhanden ist. Die Meßeinrichtung zeigt jedoch auch während des Betriebs eventuell trotz des Überdrucks der Vorrichtung eingedrungenen Sauerstoff an. In Verbindung mit einer elektronischen Regel- und Steuereinheit kann der Zerkleinerungs- und Beseitungsprozeß dann sofort automatisch unterbrochen oder mit Schutzgas geflutet werden.

Die Abführung der gasförmigen Bestandteile aus dem Arbeitsraum wie auch aus der Auffangvorrichtung für die Bestandteile der zerkleinerten Behälter kann durch die Anordnung eines Absaugventilators in der Abgasleitung beschleunigt werden.

Zur ordnungsgemäßen Entsorgung der freiwerdenden Abgase kann an das Ende der Abgasleitung eine Abfackelstation oder eine thermische Verbrennungseinrichtung angeschlossen sein. Ist eine Verbrennung der Gase aufgrund ihrer chemischen Zusammensetzung nicht möglich, so kann statt dessen eine Kondensationsvorrichtung mit anschließender Einrichtung zur fraktionierten Destillation oder eine Abfüllvorrichtung für die kondensierten Gase am Ende der Abgasleitung angeordnet sein.

Auch bei längerem Stillstand, beispielsweise über das Wochenende, muß die Zerkleinerungsvorrichtung unter Schutzgas gehalten werden, um mit Sicherheit Glimmbrände zu vermeiden. Hierzu ist zweckmäßigerweise eine unabhängige Noteinspeiseleitung für Schutzgas vorgesehen, welche hinter dem Hauptmagnetventil in die Hauptversorgungsleitung mündet. Damit die Schutzgaszufuhr auch bei abgeschaltetem oder ausgefallenem elektrischen Strom nicht unterbrochen wird, empfiehlt sich der Einbau eines handbetätigten Ventils in diese Noteinspeiseleitung.

Bei einer Ausführungsform der erfindungsgemäßen Vorrichtung besteht die Auffangvorrichtung für die Bestandteile der zerkleinerten Behälter aus einem Abfallcontainer, der unter dem Arbeitsraum angeordnet ist und mit diesem luftdicht in Verbindung steht. Ist zwischen dem unteren Ende des Arbeitsraums und diesem Abfallcontainer eine pneumatisch, hydraulisch oder elektrisch hochfahrbare Abdichtung vorgesehen, so läßt sich ein voller Container schnell und einfach gegen einen leeren austauschen.

Für eine schnelle und vollständige Spülung der gesamten Vorrichtung mit Schutzgas vor der Inbetriebnahme der Zerkleinerungswerkzeuge ist es von Vorteil, wenn auch der Abfallcontainer eigene Zusatz-Einlässe für Schutzgas aufweist.

Bevorzugt wird ferner eine Ausführung, bei der innerhalb des Abfallcontainers ein perforiertes Standrohr angeordnet ist, welches mit der Abgasleitung in Verbindung steht. Die Außenwand dieses Standrohres hält die festen Bestandteile zurück, während Gase durch die Löcher in das Standrohr und von dort in die Abgasleitung gesaugt werden.

Bei einer alternativen Ausführungsform der Zerkleinerungsvorrichtung besteht die Auffangvorrichtung für die Bestandteile der zerkleinerten Behälter im wesentlichen aus einem Rohrkettenförderer mit einem an den Arbeitsraum anschließenden Einlaufschacht, einem Förderrohr, das wenigstens ein Siebbodenelement aufweist, mit innerhalb des Förderrohrs an einer umlaufenden Kette geführten Förderscheiben, einer unterhalb des Siebbodenelements angeordneten Auffangwanne und mit einem Auswurfschacht, und umfaßt ferner einen an die Auffangwanne angeschlossenen Flüssigkeitsbehälter für flüssige Restprodukte sowie einen unter dem Auswurfschacht angeordneten Feststoffbehälter für feste Bestandteile. Die zerkleinerten Blech- und Kunststoffbestandteile der zu beseitigenden Behälter fallen mitsamt den freigesetzten Lösemitteln bzw. Restsprodukten in den Einlaufschacht des Rohrkettenförderers und von dort zwischen die Förderscheiben. Durch die Öffnungen im Siebbodenelement des Förderrohrs laufen die flüssigen Bestandteile nach unten in die Auffangwanne ab und fließen in den darunter stehenden Flüssigkeitsbehälter. Die festen Bestandteile dagegen werden durch die Förderscheiben innerhalb des Förderrohrs in Richtung des Auswurfschachts gefördert, durch welchen sie in den darunter stehenden Feststoffbehälter fallen. Infolge des Transports über das am Anfang des Förderrohrs vorgesehenen Siebbodenelement werden die bei der Zerkleinerung anfallenden Feststoffe von den freigesetzten Flüssigkeiten automatisch getrennt. Eine Rückgewinnung der oft wertvollen flüssigen Wirkstoffe und Lösemittel ist somit möglich. Ebenso wie bei der einfacheren Ausführungsform mit als untergestelltem Abfallcontainer ausgebildeter Auffangvorrichtung werden die freigesetzten Gase über die Abgasleitung, welche mit dem Arbeitsraum in Verbindung steht, abgesaugt und der Entsorgung zugeführt. Ein weiterer Vorteil der so ausgebildeten Auffangvorrichtung besteht darin, daß die Zerkleinerungsprodukte kontinuierlich aus dem Arbeitsraum entfernt werden können.

In bevorzugter Ausführung ist das Förderrohr in Förderrichtung schräg nach oben angeordnet und verjüngt sich in der Höhe zum Auswurfschacht hin. Hierdurch wird ein Verklemmen des Förderguts zwischen den Förderscheiben im Bereich des Einlaufschachts vermieden. Eine zusätzliche Hilfe zur Vermeidung von Verklemmungen des Förderguts bieten mehrere, an der Oberseite des Förderrohrs innen angebrachte, flexible Abstreifer zur Einebnung des Förderguts zwischen die Förderscheiben.

Zweckmäßigerweise sind die im Förderrohr umlaufenden Förderscheiben an ihrem Umfang mit Ausnehmungen versehen, sodaß die an den zerkleinerten Bestandteilen anhaftenden abtropfenden Flüssigkeitsreste am Boden des Förderrohrs nach unten über das Siebbodenelement in die darunter angeordnete Auffangwanne ablaufen können. Anstelle einer umlaufenden Kette mit Förderscheiben kann auch eine mit Bohrungen versehene Förderschnecke Verwendung finden.

In vorteilhafter Weiterbildung der Erfindung weist das Förderrohr im Bereich des Auswurfschachts, also an seinem oberen Ende, ein weiteres Siebbodenelement auf und ist unterhalb des Förderrohrs und parallel zu diesem eine Ablaufrinne angeordnet, welche in die Auffangwanne mündet. Eventuell bis kurz vor den Auswurfschacht mitgeführte Flüssigkeitsreste können so über das weitere Siebbodenelement in die unter dem Förderrohr verlaufende Ablaufrinne abtropfen, von wo sie in die Auffangwanne und von dort ebenfalls in den angeschlossenen Flüssigkeitsbehälter gelangen. Die schließlich in den Feststoffbehälter fallenden festen Bestandteile sind nach dem Durchlaufen des Förderrohrs nahezu vollständig abgetrocknet.

Um die gesamte, gegenüber der Umgebung luftdicht abgeschlossene Anlage stets von den bei der Zerkleinerung der Behälter freigesetzten Gasen frei zu halten, ist es ferner von Vorteil, daß das Förderrohr des Rohrkettenförderers, der Flüssigkeitsbehälter sowie der Feststoffbehälter jeweils direkt an die Abgasleitung angeschlossen sind. Ebenso läßt sich das vor der Inbetriebnahme erforderliche Durchspülen des Inneren der Anlage mit Schutzgas beschleunigen, wenn Rohrkettenförderer und Feststoffbehälter über separate Versorgungsleitungen an die Schutzgaszufuhr angeschlossen sind.

Zwei Ausführungsbeispiele der Erfindung werden nachstehend anhand der beigefügten Zeichnungen näher erläutert. Es zeigen:
Fig. 1 eine Vorrichtung zum Zerkleinern von Behältern mit unter dem Arbeitsraum angeordnetem Abfallcontainer, in schematischer Darstellung;
Fig. 2 eine zweite Ausführungsform der Zerkleinerungsvorrichtung, bei der an Stelle des Abfallcontainers ein Rohrkettenförderer, ein Flüssigkeitsbehälter und ein Feststoffbehälter vorgesehen ist, ebenfalls schematisch.
Fig.3 eine Förderscheibe des Rohrkettenförderers gemäß Figur 2, in perspektivischer Darstellung.

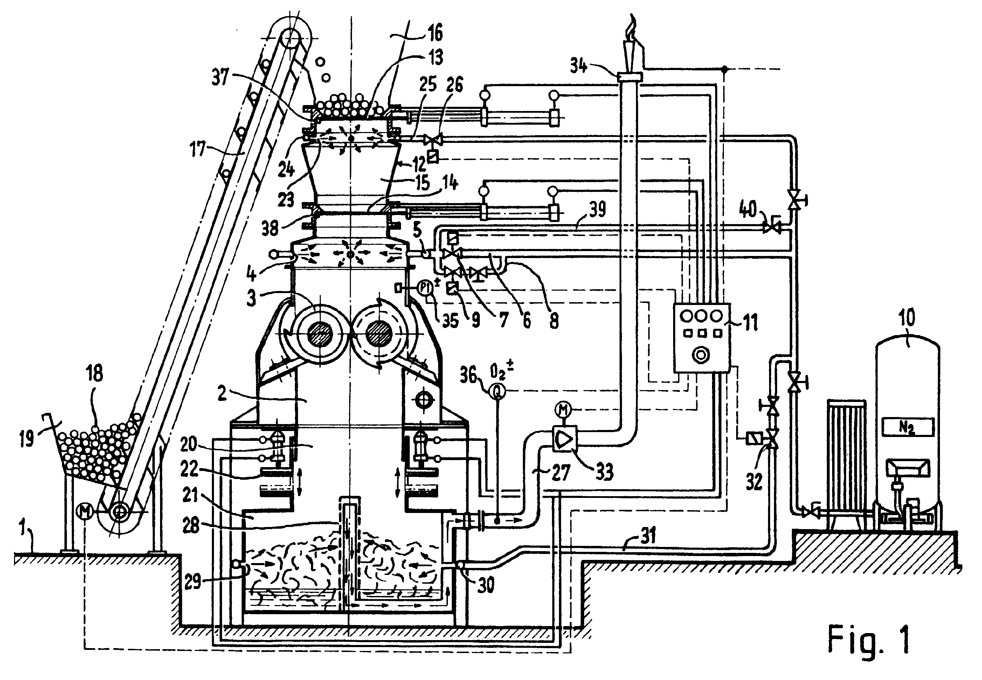

Die in Figur 1 mit allen für ihren Betrieb erforderlichen Nebenaggregaten dargestellte Zerkleinerungsvorrichtung ist auf einem Sockel 1 montiert. Kernstück ist ein luftdicht abgeschlossener Arbeitsraum 2, innerhalb dem Zerkleinerungswerkzeuge 3 angeordnet sind. Die Zerkleinerungswerkzeuge 3 sind elektromotorisch angetrieben und umfassen hier zwei um ihre Längsachse drehbare, ineinandergreifende Schneidtrommeln.

Oberhalb der Zerkleinerungswerkzeuge 3 sind mehrere Einlaßöffnungen 4 angeordnet, welche in den Arbeitsraum 2 münden. Alle Einlaßöffnungen 4 stehen mit einer gemeinsamen Ringleitung 5 in Verbindung, welche um den Arbeitsraum 2 herumführt. An einer Stelle ist die Ringleitung 5 an eine Hauptversorgungsleitung 6 angeschlossen. Mittels eines Hauptmagnetventils 7 läßt sich die Versorgungsleitung 6 öffnen oder absperren. Das Hauptmagnetventil 7 ist durch eine Bypass-Leitung 8 überbrückt, die sich mittels eines Nebenmagnetventils 9 kontinuierlich öffnen, beziehungsweise schließen läßt. Die Hauptversorgungsleitung 6 steht mit einem Schutzgas-Behälter 10 in Verbindung, der hier Stickstoff enthält. Durch Öffnen des Hauptmagnetventils 7, beziehungsweise des Nebenmagnetventils 9 strömt Stickstoff vom Behälter 10 über die Hauptversorgungsleitung 6, die Ringleitung 5 und die Einlaßöffnungen 4 in den Arbeitsraum 2 ein.

Sowohl der Antrieb der Zerkleinerungswerkzeuge 3 wie auch die Magnetventile 7 und 9 sind über elektrische Leitungen mit einer elektronischen Regel- und Steuerungseinheit 11 verbunden.

Über dem Arbeitsraum 2 ist eine insgesamt mit 12 bezeichnete Schleuse angeordnet. Zwischen einem oberen Schleusenschieber 13 und einem unteren Schleusenschieber 14 ist ein luftdicht abschließbarer Schleusenbehälter 15 ausgebildet. Die beiden Schleusenschieber 13 und 14 sind hydraulisch betätigt und werden abwechselnd, gesteuert von der Regel- und Steuerungseinheit 11, geöffnet und geschlossen. Die Endstellungen der Schleusenschieber werden mittels elektrischer Endschalter 37 und 38 überwacht.

Auf die Schleuse 12 ist ein Fülltrichter 16 aus Edelstahl aufgesetzt. Eine ebenfalls auf den Sockel 1 montierte Fördereinrichtung 17 dient zur Förderung von zu beseitigenden Behältern 18 - welche hier Druckdosen aus Metall sind - aus einem Vorlagebehälter 19 in den Fülltrichter 16.

An seinem unteren Ende geht der Arbeitsraum 2 in einen Abfallschacht 20 über. Als Auffangvorrichtung für die flüssigen und festen Bestandteile der zerkleinerten Behälter 18 ist ein Abfallcontainer 21 vorgesehen, der unterhalb des Abfallschachts 20 auf dem Sockel 1 aufsteht. Der luftdichten Verbindung zwischen Abfallcontainer 21 und Abfallschacht 20, beziehungsweise Arbeitsraum 2, dient eine hydraulisch hochfahrbare Abdichtung 22. In der Zeichnung ist die Abdichtung 22 in ihrer hochgefahrenen Stellung dargestellt. An der Schleuse 12 sind weitere Einlässe 23 für Stickstoff vorgesehen. Diese Einlässe 23 stehen mit einer um die Schleuse 12 herumführenden zweiten Ringleitung 24 in Verbindung, die über eine zweite Versorgungsleitung 25 an den Stickstoff-Behälter 10 angeschlossen ist. Mittels eines Magnetventils 26 läßt sich die zweite Versorgungsleitung 25, gesteuert von der Regel- und Steuerungseinheit 11, öffnen oder absperren. Bei geöffnetem Magnetventil 26 strömt Stickstoff aus dem Stickstoff-Behälter 10 in die Schleuse 12.

An dem Abfallcontainer 21 ist seitlich eine Abgasleitung 27 angeschlossen, welche sich innerhalb des Containers fortsetzt und in ein vertikales perforiertes Standrohr 28 übergeht. Der Abfallcontainer 21 weist an seiner Außenwand Zusatz-Einlässe 29 auf. Über eine dritte Ringleitung 30 und eine dritte Versorgungsleitung 31 stehen diese Zusatz-Einlässe 29 mit dem gleichen Stickstoff-Behälter 10 in Verbindung. Die Stickstoff-Zufuhr wird mittels eines weiteren Magnetventils 32, welches in der dritten Versorgungsleitung 31 angeordnet ist, gesteuert.

In der Abgasleitung 27 befindet sich ein explosionsgeschützter Abgasventilator 33, dessen elektromotorischer Antrieb, ebenso wie das Magnetventil 32 für die dritte Versorgungsleitung 31, über elektrische Leitungen mit der Regel- und Steuerungseinheit 11 verbunden ist. Die Abgasleitung 27 ist nach oben geführt und endet in einer Abfackelstation 34.

Im Arbeitsraum 2 ist eine Druckmeßeinrichtung 35 zur Messung des darin herrschenden Überdrucks angeordnet. In die Abgasleitung 27 ist unmittelbar nach deren Herausführung aus dem Abfallcontainer 21 eine Sauerstoff-Meßeinrichtungen 36 eingebaut. Die Meßeinrichtungen 35 und 36 sind ebenfalls elektrisch an die Regel- und Steuerungseinheit 11 angeschlossen.

Es ist ferner eine unabhängig vom Hauptmagnetventil 7 arbeitende Noteinspeisung für Sticksktoff vorgesehen; diese besteht aus einer mit dem Stickstoff-Behälter 10 in Verbindung stehende Noteinspeiseleitung 39 mit relativ dickem Querschnitt, die hinter dem Hauptmagnetventil 7 unmittelbar vor der Ringleitung 4 in die Hauptversorgungsleitung 6 mündet. In der Noteinspeiseleitung 39 ist ein handbetätigtes Kugelhahnventil 40 angeordnet.

Die vorstehend beschriebene Vorrichtung arbeitet wie folgt:

Bevor mit der Zerkleinerung von zu beseitigenden Behältern 18 begonnen wird, muß bei laufenden Zerkleinerungswerkzeugen 3, geschlossenem Schleusenschieber 13 und zugefahrener Abdichtung 22 zwischen Abfallcontainer 21 und Abfallschacht 20 Stickstoff in ausreichender Menge aus dem Stickstoff-Behälter 10 über die Einlaßöffnungen 4 in den Arbeitsraum, über die weiteren Einlässe 23 in die Schleuse 12 und über die Zusatz-Einlässe 25 in den Abfallcontainer 21 gedrückt werden. Hierdurch wird in der Vorichtung befindliche, sauerstoffhaltige Luft über die Abgasleitung 27 entfernt, um die gesamte Vorrichtung zu inertisieren. Während dieses vorbereitenden Spülvorgangs wird der Restsauerstoffgehalt in der Abluft mittels der Sauerstoff-Meßeinrichtung 36 in der Abgasleitung 27 gemessen. Unterschreitet der Sauerstoffgehalt einen vorgegebenen Grenzwert, welcher abhängig ist von der unteren Explosionsgrenze der in den Behältern 18 befindlichen Treibmittel und sonstigen Restprodukte, so ist die Vorrichtung betriebsbereit.

Bei geschlossenem Magnetventil 7 wird nun lediglich der Arbeitsraum 2 unter einem leichten Überdruck gehalten, wobei durch das geöffnete Nebenmagnetventil 9 und die Bypass-Leitung 8 eine wesentlich geringere Stickstoff-Menge durch die Einlaßöffnungen 4 strömt. Der herrschende Überdruck wird von der Druckmeßeinrichtung 35 laufend überwacht.

Gleichzeitig wird eine gedrosselte Menge von Stickstoff über das Magnetventil 26, die zweite Versorgungsleitung 25 und die zweite Ringleitung 24 in die Schleuse 12 geleitet. Dabei ist der obere Schleusenschieber 13 geschlossen, sodaß auch im Schleusenbehälter 15 eine inerte Stickstoff-Atmosphäre aufrecht erhalten wird.

Die zu beseitigenden Behälter 18 werden nun von der Fördereinrichtung 17 aus dem Vorlagebehälter 19 nach oben gefördert und in den Fülltrichter 16 eingeworfen. Die Behälter 18 sammeln sich auf dem geschlossenen oberen Schleusenschieber 13. Ist eine vorbestimmte Menge von Behältern 18 zusammengekommen, so öffnet der Schleusenschieber 13 und die Behälter 18 fallen auf den geschlossenen unteren Schleusenschieber 14. Anschließend schließt sich der obere Schleusenschieber 13, sodaß der Schleusenbehälter 15 luftdicht abgeschlossen ist. Während des Einbringens der gesammelten Menge in die Schleuse 12 ist die Fördereinrichtung 17 abgeschaltet.

Im nächsten Verfahrensschritt wird der Schleusenbehälter 15 durch Öffnen des unteren Schleusenschiebers 14 entleert, sodaß die Behälter 18 in den Arbeitsraum 2 und auf die laufenden Zerkleinerungswerkzeuge 3 fallen. Die dabei in die oben geschlossene Schleuse 12 entweichende geringe Menge von Stickstoff wird sofort über die Einlaßöffnungen 4 und die weiteren Einlässe 23 ersetzt. Die Behälter 18 werden nun von den Zerkleinerungswerkzeugen 3 erfaßt und zerrissen. Die dabei anfallenden festen Bestandteile in Form von Metallsplittern fallen durch den Abfallschacht 20 in den Abfallcontainer 21. Eventuell in den Behältern 18 enthaltene Flüssigkeit sammelt sich in einem Sumpf am Boden des Abfallcontainers 21. Die aus den zerstörten Behältern 18 entweichenden Treibgase und gegebenenfalls vorhandene gasförmige Restprodukte werden über das perforierte Standrohr 28 im Abfallcontainer 21 und die angeschlossene Abgasleitung 27 vom Abgasventilator 33 abgesaugt und in der Abfackelstation 34 verbrannt.

Zwischenzeitlich hat die Fördereinrichtung 17 eine weitere vorbestimmte Menge von zu beseitigenden Behältern 18 in den Fülltrichter 16 eingeworfen. Der beschriebene Vorgang wiederholt sich zyklisch. Das zeitlich aufeinander abgestimmte, abwechselnde Schließen der beiden Schleusenschieber 13, 14 und das ständige Nachströmen von Stickstoff unter Aufrechterhaltung eines leichten Überdrucks innerhalb des Arbeitsraums 2 gewährleistet, daß die Zerstörung der Behälter 18 durch die Zerkleinerungswerkzeuge 3 stets unter einer inerten Stickstoff-Atmosphäre stattfindet. Jegliche Explosionsgefahr ist somit ausgeschlossen. Ist der Abfallcontainer 21 mit festen Bestandteilen angefüllt, so wird der Beseitigungsprozeß unterbrochen, die Zerkleinerungswerkzeuge 3 abgeschaltet und die Abdichtung 22 hochgefahren, sodaß ein leerer Abfallcontainer 21 anstelle des vollen untergestellt werden kann. Nach dem Herabfahren der Abdichtung 22 und der erneuten, oben beschriebenen Spülung der Beseitigungsvorrichtung mit Stickstoff kann die Abfallbeseitigung fortgesetzt werden.

Bei längeren Stillstandszeiten wird die gesamte Vorrichtung über die Noteinspeiseleitung 39 bei geöffnetem Kugelhahnventil 40 unter Stickstoff gehalten.

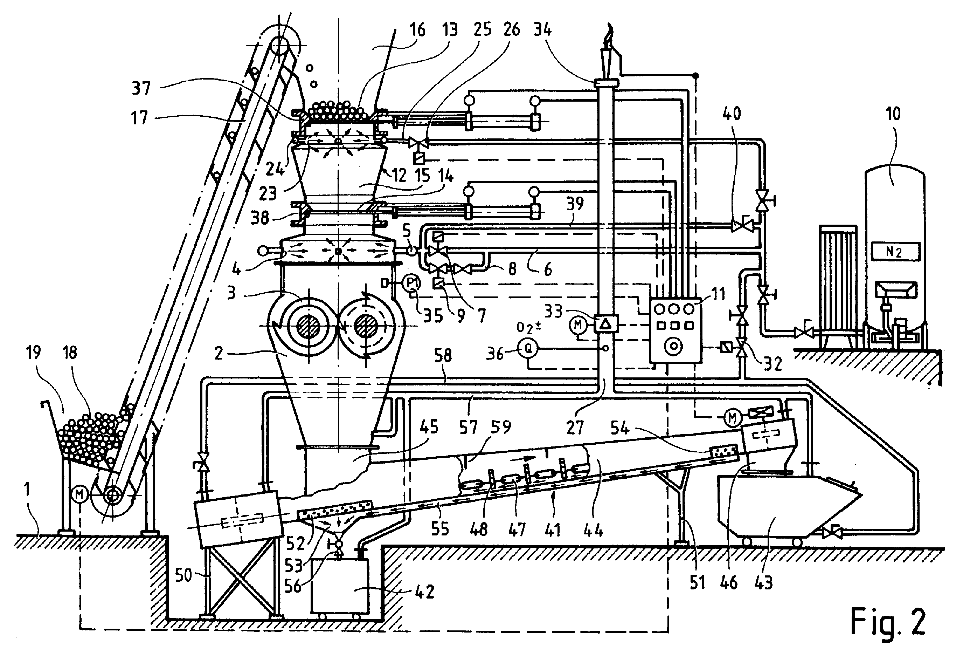

In Figur 2 ist eine alternative Ausführungsform der Zerkleinerungsvorrichtung dargestellt. Dabei ist der Abfallcontainer 21 von Figur 1 ersetzt durch eine andere Auffangvorrichtung, die im wesentlichen aus einem Rohrkettenförderer 41, einem Flüssigkeitsbehälter 42 und einem Feststoffbehälter 43 besteht. Der Rohrkettenförderer 41 weist ein in Förderrichtung schräg nach oben angeordnetes Förderrohr 44 auf, mit einem an den Arbeitsraum 2 anschließenden Einlaufschacht 45 und einem Auswurfschacht 46 an seinem gegenüberliegenden Ende. Im Innern des Förderrohrs 44 läuft eine Kette 47 um, an welcher in regelmäßigen Abständen Förderscheiben 48 befestigt sind.

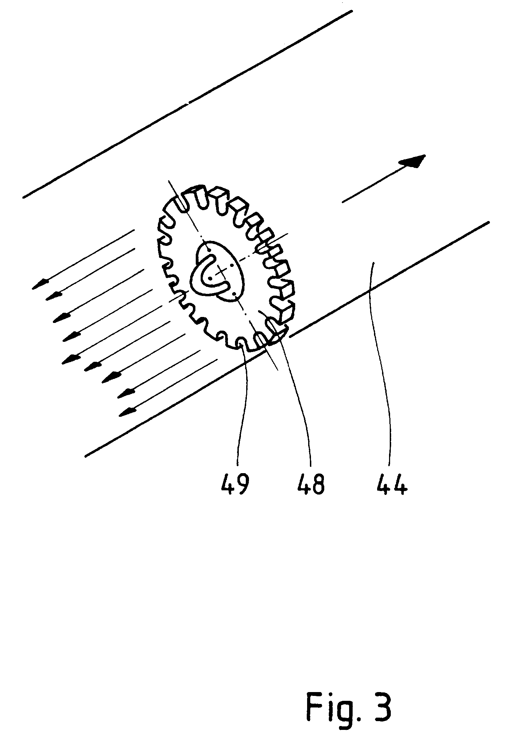

In Figur 3 ist eine einzelne dieser Förderscheiben 48 perspektivisch dargestellt. An ihrem Umfang ist die Förderscheibe 48 mit Ausnehmungen 49 versehen, sodaß größere Feststoffteile entlang der mit einem dicken Pfeil angegebenen Förderrichtung schräg nach oben transportiert werden; abtropfende Flüssigkeitsreste jedoch fließen entgegen der Förderrichtung zwischen den Ausnehmungen 49 und der Innenwand des Förderrohrs 44 hindurch schräg nach unten ab.

Das Förderrohr 44 (vgl. Fig. 2) ist über den Einlaufschacht 45 luftdicht mit dem Arbeitsraum 2 verbunden. Ein Tragwerk 50 und eine Stütze 51 stützen den Rohrkettenförderer 41 gegenüber dem Sockel 1 ab und tragen damit gleichzeitig das Gewicht der gesamten Zerkleinerungsvorrichtung.

Das Förderrohr 44 besitzt im Bereich des Einlaufschachts 45 ovalen Querschnitt, der sich zum Auswurfschacht 46 hin stetig in der Höhe verjüngt und in einen dem Durchmesser der Förderscheiben 48 entsprechenden runden Querschnitt übergeht. An der Innenseite des Förderrohrs 44 sind oberhalb der Förderscheiben 48 mehrere flexible Abstreifer 59 angebracht. Unterhalb des Einlaufschachts 45 weist das Förderrohr 44 ein unteres Siebbodenelement auf, durch dessen Löcher flüssige Bestandteile der zerkleinerten Behälter 18 in eine darunter angeordnete Auffangwanne 43 abfließen können. Unmittelbar vor dem Auswurfschacht 46 ist ein im wesentlichen gleich ausgebildetes oberes Siebbodenelement 54 vorgesehen.

Zwischen unterem Siebbodenelement 52 und oberem Siebbodenelement 54 verläuft eine Ablaufrinne 55 unterhalb und parallel zum Förderrohr 44. Mit ihrem unteren Ende mündet die Ablaufrinne 55 in die Auffangwanne 53. Der Flüssigkeitsbehälter 42 ist über ein handbetätigtes Kugelhahnventil 56 an die Auffangwanne 53 angeschlossen.

Die festen und flüssigen Bestandteile der von den Zerkleinerungswerkzeugen 3 im Arbeitsraum 2 zerkleinerten Behälter 18 fallen durch den Einlaufschacht 45 von oben in das Förderrohr 44 zwischen die Förderscheiben 48. Der größte Teil der Flüssigkeit fließt sofort durch das untere Siebbodenelement 52 und die Auffangwanne 53 in den darunter stehenden Flüssigkeitsbehälter 42. Die festen Bestandteile werden dagegen von den Förderscheiben 48 erfaßt und innerhalb des Förderrohrs 44 schräg nach oben gefördert. Eventuell noch anhaftende Flüssigkeitsreste gelangen durch die Löcher im oberen Siebbodenelement 54 in die Ablaufrinne 55 und fließen ebenfalls in die Auffangwanne 53 bzw. den Flüssigkeitsbehälter 42. Die trockenen festen Bestandteile fallen durch den Auswurfschacht 46 in den darunter stehenden Feststoffbehälter 43. Der Abtransport der flüssigen und festen Bestandteile der zerkleinerten Behälter 18 erfolgt somit kontinuierlich durch den Rohrkettenförderer 41, wobei gleichzeitig eine Separierung von festen und flüssigen Bestandteilen stattfindet. Nach Schließung des Kugelhahnventils 56 kann ein voller Flüssigkeitsbehälter 42 gegen einen leeren Behälter ausgetauscht werden; ebenso läßt sich der wähnend des Betriebs luftdicht an den Auswurfschacht 46 angeschlossene Feststoffbehälter 43 leicht austauschen.

Bis auf den kontinuierlichen Abtransport der Bestandteile der zerkleinerten Behälter 18 durch den Rohrkettenförderer 41 arbeitet die in Figur 2 dargestellte Vorrichtung genau wie die zuerst beschriebene Vorrichtung gemäß Figur 1.

Arbeitsraum 2, das Innere des Rohrkettenförderers 41, Flüssigkeitsbehälter 42 und Feststoffbehälter 43 bilden während des Zerkleinerungsprozesses eine luftdicht gegenüber der Umgebung abgeschlossene Einheit, sodaß keine Schadstoffe nach außen dringen können. Der untere Teil des Arbeitsraums 2, das Innere des Rohrkettenförderers 41 sowie die beiden Behälter 42 und 43 sind jeweils über getrennte Leitungen mit einer Abgas-Sammelleitung 57 verbunden, welche an die Abgasleitung 27 angeschlossen ist.

Bereits anhand von Figur 1 wurde beschrieben, daß vor dem Beginn der Zerkleinerung von zu beseitigenden Behältern 18 die gesamte Vorrichtung mit Stickstoff aus dem Behälter 10 gespült werden muß, um die innerhalb der Vorrichtung befindliche sauerstoffhaltige Luft über die Abgasleitung 27 herauszudrücken. Hierzu ist sowohl der Rohrkettenförderer 41 als auch der Feststoffbehälter 43 an eine zusätzliche Versorgungsleitung 58 für Stickstoff angeschlossen. Die Stickstoff-Zufuhr wird mittels des weiteren Magnetventils 32, das in dieser zusätzlichen Versorgungsleitung 58 angeordnet ist, gesteuert.

### Verzeichnis der Bezugsziffern

- 1: Sockel
- 2: Arbeitsraum
- 3: Zerkleinerungswerkzeuge
- 4: Einlaßöffnungen (in 2)
- 5: Ringleitung (an 4)
- 6: Hauptversorgungsleitung (an 5)
- 7: Hauptmagnetventil (in 6)
- 8: Bypass-Leitung (über 7)
- 9: Nebenmagnetventil (in 8)
- 10: Stickstoff-Behälter
- 11: Regel- und Steuerungseinheit
- 12: Schleuse
- 13: oberer Schleusenschieber (von 12)
- 14: unterer Schleusenschieber (von 12)
- 15: Schleusenbehälter (zwischen 13 und 14)
- 16: Fülltrichter
- 17: Fördereinrichtung
- 18: Behälter
- 19: Vorlagebehälter (für 18)
- 20: Abfallschacht (an 2)
- 21: Abfallcontainer
- 22: Abdichtung (zwischen 20 und 21)
- 23: weitere Einlässe (in 12)
- 24: zweite Ringleitung (für 23)
- 25: zweite Versorgungsleitung (an 24)
- 26: Magnetventil (in 25)
- 27: Abgasleitung (an 21)
- 28: perforiertes Standrohr (in 21)
- 29: Zusatz-Einlässe (an 21)
- 30: dritte Ringleitung
- 31: dritte Versorgungsleitung
- 32: Magnetventil (in 31)
- 33: Abgasventilator (in 27)
- 34: Abfackelstation
- 35: Druckmeßeinrichtung (in 2)
- 36: Sauerstoff-Meßeinrichtung (in 27)
- 37: Endschalter (an 13)
- 38: Endschalter (an 14)
- 39: Noteinspeiseleitung (für 2)
- 40: Kugelhahnventil (in 39)
- 41: Rohrkettenförderer
- 42: Flüssigkeitsbehälter
- 43: Feststoffbehälter
- 44: Förderrohr (von 1)
- 45: Einlaufschacht (von 44)
- 46: Auswurfschacht (an 44)
- 47: Kette (von 41)
- 48: Förderscheibe (an 47)
- 49: Ausnehmung (von 48)
- 50: Tragwerk
- 51: Stütze
- 52: unteres Siebbodenelement
- 53: Auffangwanne
- 54: oberes Siebbodenelement
- 55: Ablaufrinne
- 56: Kugelhahnventil (für 42)
- 57: Abgas-Sammelleitung
- 58: zusätzliche Versorgungsleitung
- 59: Abstreifer

## Patentansprüche

1. Vorrichtung zum Zerkleinern und Beseitigen von unter Druck stehenden Metalldosen, welche Treibmittel und/oder leicht brennbare Restprodukte in flüssiger oder fester Form enthalten, mit
- einem Arbeitsraum (2), in dem motorgetriebene Zerkleinerungswerkzeuge (3) angeordnet sind,
dadurch **gekennzeichnet,** daß
- der Arbeitsraum (2) luftdicht so abgeschlossen ist, daß darin während des Betriebs ein leichter Überdruck aufgebaut werden kann;
- in den Arbeitsraum (2) eine Einlaßöffnung (4) für Stickstoff mündet;
- über dem Arbeitsraum (2) eine Schleuse (12) angeordnet ist, welche einen oberen (13) und einen unteren (14) Schleusenschieber sowie einen von diesen luftdicht abschließbaren Schleusenbehälter (15) umfaßt;
- ein Fülltrichter (16) auf die Schleuse (12) aufgesetzt ist;
- eine Fördereinrichtung (17) zum kontinuierlichen Einfüllen von Behältern (18) in den Fülltrichter (16) vorgesehen ist;
- eine Auffangvorrichtung für die Bestandteile der zerkleinerten Behälter (18) vorgesehen ist, welche sich luftdicht an den Arbeitsraum 2 anschließt;
- mit dem Arbeitsraum (2) eine Abgasleitung (27) zur Abführung der bei der Zerkleinerung freigesetzten Gase in Verbindung steht;
- eine Sauerstoff-Meßeinrichtung (36) zur Überwachung des Sauerstoffgehalts in der Abluft vorgesehen ist.

2. Vorrichtung nach Anspruch 1, dadurch **gekennzeichnet,** daß die Einlaßöffnungen (4) für Stickstoff oberhalb der Zerkleinerungswerkzeuge (3) angeordnet sind.

3. Vorrichtung nach Anspruch 1 oder 2, dadurch **gekennzeichnet,** daß
- die Einlaßöffnungen (4) mit einer Ringleitung (5) in Verbindung stehen, welche um den Arbeitsraum (2) herumführt;
- an diese Ringleitung (5) eine Hauptversorgungsleitung (6) angeschlossen ist, in der ein Hauptmagnetventil (7) angeordnet ist.

4. Vorrichtung nach Anspruch 3, **gekennzeichnet** durch
- eine Bypass-Leitung (8), die das Hauptmagnetventil (7) überbrückt;
- ein Nebenmagnetventil (9) innerhalb der Bypass-Leitung (8).

5. Vorrichtung nach einem der Ansprüche 1 bis 4, dadurch **gekennzeichnet,** daß die Schleusenschieber (13, 14) pneumatisch, hydraulisch oder elektrisch betätigt sind.

6. Vorrichtung nach einem der Ansprüche 1 bis 5, dadurch **gekennzeichnet,** daß die Schleuse (12) weitere Einlässe (23) für Stickstoff aufweist.

7. Vorrichtung nach einem der Ansprüche 1 bis 6, **gekennzeichnet** durch eine Druckmeßeinrichtung (35) im Arbeitsraum (2).

8. Vorrichtung nach einem der Ansprüche 1 bis 7, dadurch **gekennzeichnet,** daß in der Abgasleitung (27) ein Absaugventilator (33) angeordnet ist.

9. Vorrichtung nach einem der Ansprüche 1 bis 8, dadurch **gekennzeichnet,** daß an das Ende der Abgasleitung (27) eine Abfackelstation (34) oder eine thermische Verbrennungseinrichtung angeschlossen ist.

10. Vorrichtung nach einem der Ansprüche 1 bis 9, dadurch **gekennzeichnet,** daß an das Ende der Abgasleitung (27) eine Kondensationsvorrichtung und anschließend eine Einrichtung zur fraktionierten Destillation der abgeleiteten Gase oder eine Abfüllvorrichtung für die kondensierten Gase angeordnet ist.

11. Vorrichtung nach einem der Ansprüche 1 bis 10, **gekennzeichnet** durch eine unabhängige Noteinspeiseleitung (39) für Schutzgas, welche hinter dem Hauptmagnetventil (7) in die Hauptversorgungsleitung (6) mündet.

12. Vorrichtung nach einem der Ansprüche 1 bis 11, dadurch **gekennzeichnet,** daß die Auffangvorrichtung für die Bestandteile der zerkleinerten Behälter (18) ein unter dem Arbeitsraum (2) angeordneter und mit diesem luftdicht in Verbindung stehender Abfallcontainer (21) ist.

13. Vorrichtung nach Anspruch 12, **gekennzeichnet** durch eine pneumatisch, hydraulisch oder elektrisch hochfahrbare Abdichtung (22) zwischen Arbeitsraum (2) und Abfallcontainer (21).

14. Vorrichtung nach Anspruch 12 oder 13, dadurch **gekennzeichnet,** daß der Abfallcontainer (21) Zusatz-Einlässe (29) für Schutzgas aufweist.

15. Vorrichtung nach Anspruch 14, dadurch **gekennzeichnet,** daß innerhalb des Abfallcontainers (21) ein perforiertes Standrohr (28) vorgesehen ist, welches mit der Abgasleitung (27) in Verbindung steht.

16. Vorrichtung nach einem der Ansprüche 1 bis 11, dadurch **gekennzeichnet,** daß die Auffangvorrichtung für die Bestandteile der zerkleinerten Behälter (18) umfaßt:
- einen Rohrketttenförderer (41), mit einem an den Arbeitsraum (2) anschließenden Einlaufschacht (45), einem Förderrohr (44), das wenigstens ein Siebbodenelement (52) aufweist, innerhalb des Förderrohrs (44) an einer umlaufenden Kette (47) geführten Förderscheiben (48), einer unterhalb des Siebbodenelements (52) angeordneten Auffangwanne (53) und einem Auswurfschacht (46);
- einen an die Auffangwanne (53) angeschlossenen Flüssigkeitsbehälter (42) für flüssige Restprodukte;
- einen unter dem Auswurfschacht (46) angeordneten Feststoffbehälter (43) für feste Bestandteile.

17. Vorrichtung nach Anspruch 16, dadurch **gekennzeichnet,** daß das Förderrohr (44)
- in Förderrichtung schräg nach oben angeordnet ist;
- sich zum Auswurfschaft (46) hin in der Höhe verjüngt;
- mit mehreren Abstreifern (59) an der Innenseite versehen ist.

18. Vorrichtung nach Anspruch 16 oder 17, dadurch **gekennzeichnet,** daß die Förderscheiben (48) an ihrem Umfang mit Ausnehmungen (49) versehen sind.

19. Vorrichtung nach Anspruch 17 oder 18, dadurch **gekennzeichnet,** daß
- das Förderrohr (44) im Bereich des Auswurfschachts (46) ein weiteres Siebbodenelement (54) aufweist,
- unterhalb des Förderrohrs (44) und parallel zu diesem eine Ablaufrinne (55) angeordnet ist, die in die Auffangwanne (53) mündet.

20. Vorrichtung nach einem der Ansprüche 16 bis 19, dadurch **gekennzeichnet,** daß das Förderrohr (44) des Rohrkettenförderers (41), der Flüssigkeitsbehälter (42) und der Feststoffbehälter (43) an die Abgasleitung (27) angeschlossen sind.

21. Vorrichtung nach einem der Ansprüche 16 bis 20, dadurch **gekennzeichnet,** daß der Rohrkettenförderer (41) und der Feststoffbehälter (43) an die Schutzgasleitung (58) angeschlossen sind.

## Claims

1. Device for crushing and disposing of pressurised metal cans that contain propellants and/or readily combustible product residues in liquid or solid form, with
a working chamber (2) in which motor-driven crushing tools (3) are arranged,
**characterised in that**
the working chamber (2) is air-tightly closed in such a manner that a slight excess pressure can be built up therein during operation;
an inlet opening (4) for nitrogen opens into the working chamber (2);
a sluice (12) is arranged over the working chamber (2), the sluice (12) comprising an upper (13) and a lower (14) sluice slide valve and a sluice container (15) air-tightly closable by those sluice slide valves;
a filling hopper (16) is set upon the sluice (12);
a conveyor device (17) for the continuous charging of containers (18) into the filling hopper (16) is provided;
a collecting device for the components of the crushed containers (18) is provided which air-tightly adjoins the working chamber (2);
a waste-gas conduit (27) for the removal of the gases freed during the crushing is connected with the working chamber (2);
an oxygen-measuring apparatus (36) is provided for monitoring the oxygen content in the waste air.

2. Device according to claim 1, **characterised in that** the inlet openings (4) for nitrogen are arranged above the crushing tools (3).

3. Device according to claim 1 or 2, **characterised in** **that**
the inlet openings (4) are in communication with a ring conduit (5) which leads around the working chamber (2);
a main supply conduit (6) in which a main magnetic valve (7) is arranged is connected to this ring conduit (5).

4. Device according to claim 3, **characterised by**
a by-pass conduit (8) which bridges over the main magnetic valve (7);
a secondary magnetic valve (9) within the by-pass conduit (8).

5. Device according to any one of claims 1 to 4, **characterised** **in that** the sluice slide valves (13, 14) are operated pneumatically, hydraulically or electrically.

6. Device according to any one of claims 1 to 5, **characterised in that** the sluice (12) comprises further inlets (23) for nitrogen.

7. Device according to any one of claims 1 to 6, **characterised by** a pressure-measuring apparatus (35) in the working chamber (2).

8. Device according to any one of claims 1 to 7, **characterised in that** a suction fan (33) is arranged in the waste-gas conduit (27).

9. Device according to any one of claims 1 to 8, **characterised in that** a flare-off station (34) or a thermal combustion apparatus is connected to the end of the waste-gas conduit (27).

10. Device according to any one of claims 1 to 9, **characterised in that** a condensation device is arranged on the end of the waste-gas conduit (27) and next there is arranged an apparatus for the fractional distillation of the conducted-away gases or a decanting device for the condensed gases.

11. Device according to any one of claims 1 to 10, **characterised by** an independent emergency infeed conduit (39) for protective gas which opens into the main supply conduit (6) after the main magnetic valve (7).

12. Device according to any one of claims 1 to 11, **characterised in that** the collecting device for the constituents of the crushed containers (18) is a waste container (21) arranged beneath the working chamber (2) and in air-tight connection therewith.

13. Device according to claim 12, **characterised by** a pneumatically, hydraulically or electrically raisable seal (22) between working chamber (2) and waste container (21).

14. Device according to claim 12 or 13, **characterised in that** the waste container (21) comprises additional inlets (29) for protective gas.

15. Device according to claim 14, **characterised in that** within the waste container (21) a perforated upright pipe (28) is provided which is in communication with the waste-gas conduit (27).

16. Device according to any one of claims 1 to 11, **characterised in that** the collecting device for the components of the crushed containers (18) comprises:
a tube-chain conveyor (41), with an entry shaft (45) adjoining the working chamber (2), a conveyor tube (44) which comprises at least one sieve floor element (52), conveyor wheels (48) guided within the conveyor tube (44) on a circulating chain (47), a collecting trough (53) arranged below the sieve floor element (52), and a discharge shaft (46);
a fluid container (42) connected to the collecting trough (53), for liquid product residues;
a solid container (43) arranged below the discharge shaft (46), for solid constituents.

17. Device according to claim 16, **characterised in that** the conveyor tube (44)
is arranged obliquely upwards in the conveying direction;
tapers in height towards the discharge shaft (46);
is provided on the inner side with a number of scrapers (59).

18. Device according to claim 16 or 17, **characterised in that** the conveyor wheels (48) are provided on their circumference with apertures (49).

19. Device according to claim 17 or 18, **characterised in that**
the conveyor tube (44) has in the region of the discharge shaft (46) a further sieve floor element (54),
below the conveyor tube (44) and parallel thereto there is arranged a drain channel (55) which opens into the collecting trough (53).

20. Device according to any one of claims 16 to 19, **characterised in that** the conveyor tube (44) of the tube-chain conveyor (41), the fluid container (42) and the solid container (43) are connected to the waste-gas conduit (27).

21. Device according to any one of claims 16 to 20, **characterised in that** the tube-chain conveyor (41) and the solid container (43) are connected to the protective gas conduit (58).

## Revendications

1. Dispositif pour le broyage et l'élimination de boîtes métalliques sous pression, contenant des agents propulseurs et/ou des produits résiduels facilement combustibles sous forme liquide ou solide, comprenant :
- une chambre de travail (2) dans laquelle sont disposés des outils de broyage (3) entraînés par moteur,
caractérisé en ce que :
- la chambre de travail (2) est fermée de manière étanche à l'air, de telle sorte qu'une légère surpression puisse s'y établir lors du fonctionnement;
- une ouverture d'entrée (4) pour de l'azote débouche dans la chambre de travail (2);
- un sas (12) est disposé au-dessus de la chambre de travail (2) et comprend une vanne de sas supérieure (13) et une vanne de sas inférieure (14) ainsi qu'un corps de sas (15) pouvant être fermé par celles-ci de manière étanche à l'air;
- une trémie de remplissage (16) coiffe le sas (12);
- il est prévu un dispositif transporteur (17) pour le remplissage continu de récipients (18) dans la trémie de remplissage (16);
- il est prévu un collecteur pour les constituants des récipients (18) broyés, lequel est raccordé de manière étanche à l'air à la chambre de travail (2);
- une conduite de gaz d'échappement (27) pour l'évacuation des gaz dégagés lors du broyage communique avec la chambre de travail (2),
- un dispositif (36) pour la mesure de l'oxygène est prévu pour la surveillance de la teneur en oxygène du gaz sortant.

2. Dispositif selon la revendication 1, caractérisé en ce que les ouvertures d'admission (4) pour l'azote sont disposées au-dessus des outils de broyage (3).

3. Dispositif selon l'une des revendications 1 et 2, caractérisé en ce que :
- les ouvertures d'admission (4) communiquent avec une conduite circulaire (5) qui passe autour de la chambre de travail (2);
- à cette conduite circulaire (5) est raccordée une conduite d'alimentation principale (6) dans laquelle est insérée une électrovanne principale (7).

4. Dispositif selon la revendication 3, caractérisé par :
- une conduite de dérivation (8) qui court-circuite l'électrovanne principale (7);
- une électrovanne secondaire (9) installée dans la conduite de dérivation (8).

5. Dispositif selon l'une des revendications 1 à 4, caractérisé en ce que les vannes de sas (13,14) sont actionnées de manière pneumatique, hydraulique ou électrique.

6. Dispositif selon l'une des revendications 1 à 5, caractérisé en ce que le sas (12) comprend des entrées supplémentaires (23) pour l'azote.

7. Dispositif selon l'une des revendications 1 à 6, caractérisé en ce qu'il comprend un dispositif manométrique (35) dans la chambre de travail (2).

8. Dispositif selon l'une des revendications 1 à 7, caractérisé en ce qu'un ventilateur d'aspiration (33) est monté dans la conduite de gaz d'échappement (27).

9. Dispositif selon l'une des revendications 1 à 8, caractérisé en ce qu'à l'extrémité de la conduite de gaz d'échappement (27) est raccordée une torchère (34) ou une installation de combustion thermique.

10. Dispositif selon l'une des revendications 1 à 9, caractérisé en ce qu'à l'extrémité de la conduite de gaz d'échappement (27) est monté un dispositif de condensation suivi d'un dispositif pour la distillation fractionnée des gaz évacués ou un dispositif d'embouteillage pour les gaz condensés.

11. Dispositif selon l'une des revendications 1 à 10, caractérisé en ce qu'il comprend une conduite d'alimentation de secours indépendante (39) pour le gaz protecteur qui débouche en aval de l'électrovanne principale (7) dans la conduite d'alimentation principale (6).

12. Dispositif selon l'une des revendications 1 à 11, caractérisé en ce que le collecteur pour les constituants des récipients (18) broyés est un conteneur de déchets (21) installé sous la chambre de travail (2) et raccordé de manière étanche à l'air à celle-ci.

13. Dispositif selon la revendication 12, caractérisé en ce qu'il comprend entre la chambre de travail (2) et le conteneur de déchets (21) un obturateur (22) pouvant être relevé pneumatiquement, hydrauliquement ou électriquement.

14. Dispositif selon l'une des revendications 12 et 13, caractérisé en ce que le conteneur de déchets (21) comporte des entrées supplémentaires (29) pour le gaz protecteur.

15. Dispositif selon la revendication 14, caractérisé en ce qu'à l'intérieur du conteneur de déchets (21) est prévu un tuyau vertical perforé (28) qui communique avec la conduite de gaz d'échappement (27).

16. Dispositif selon l'une des revendications 1 à 11, caractérisé en ce que le collecteur pour les constituants des récipients (18) broyés comprend :
- un transporteur tubulaire à chaîne (41) avec un puits d'entrée (45) se raccordant à la chambre de travail (2), un tube d'extraction (44) qui comprend au moins un élément de fond perforé (52), des disques transporteurs (48) guidés à l'intérieur du tube d'extraction (44) sur une chaîne (47) sans fin, une cuve collectrice (53) disposée en dessous de l'élément de fond perforé (52), et un puits d'éjection (46);
- un réservoir à liquide (42) pour les produits résiduels liquides qui est raccordé à la cuve collectrice (53);
- un réservoir pour matières solides (43) disposé en dessous du puits d'éjection (46).

17. Dispositif selon la revendication 16, caractérisé en ce que le tube d'extraction (44)
- est incliné vers le haut dans le sens du transport;
- se rétrécit en hauteur en direction du puits d'éjection (46);
- comprend plusieurs raclettes (59) sur sa face intérieure.

18. Dispositif selon l'une des revendications 16 et 17, caractérisé en ce que les disques transporteurs (48) sont munis sur leur périphérie d'évidements (49).

19. Dispositif selon l'une des revendications 17 et 18, caractérisé en ce que :
- le tube d'extraction (44) est équipé dans la région du puits d'éjection (46) d'un élément de fond perforé supplémentaire (54);
- une rigole d'écoulement (55) débouchant dans la cuvette collectrice (53) est disposée en dessous du tube d'extraction (44) et parallèlement à celui-ci.

20. Dispositif selon l'une des revendications 16 à 19, caractérisé en ce que le tube d'extraction (44) du transporteur tubulaire à chaîne (41), le réservoir à liquide (42) et le réservoir pour matières solides (43) sont raccordés à la conduite de gaz d'échappement (27).

21. Dispositif selon l'une des revendications 16 à 20, caractérisé en ce que le transporteur tubulaire à chaîne (41) et le réservoir pour matières solides (43) sont raccordés à la conduite de gaz protecteur (58).
